# EUROPÄISCHE PATENTSCHRIFT

(11) **EP 1 628 875 B1**
(45) Veröffentlichungstag und Bekanntmachung des Hinweises auf die Patenterteilung: **24.08.2011**
(21) Anmeldenummer: 04729636.3
(22) Anmeldetag: 27.04.2004
(51) Int. Cl.: B63B 49/00, B63H 21/22

(54) **AUTOMATION TRÄGERSYSTEM SCHIFF**
AUTOMATED CARRIER SYSTEM OF A SHIP
NAVIRE A SYSTEME DE BASE AUTOMATIQUE

(30) Priorität: 30.05.2003 US 448225
(43) Veröffentlichungstag der Anmeldung: 01.03.2006
(73) Patentinhaber: SIEMENS AKTIENGESELLSCHAFT, 80333 München (DE)
(72) Erfinder: MÜLLER, Karl-Heinz, 27412 Tarmstedt (DE); SCHULZE, Matthias, 21335 Lüneburg (DE)
(86) Internationale Anmeldenummer: PCT/EP2004/004440
(87) Internationale Veröffentlichungsnummer: WO 2004/106153

(56) Entgegenhaltungen:
- PETERSEN S T: "THE COMMAND, CONTROL, COMMUNICATIONS AND INFORMATION SYSTEM" STANDARD FLEX 300. TRUE MULTI-ROLE SHIP, XX, XX, März 1992 (1992-03), Seiten 10-11, XP002130723
- RYLE M: "ONE MAN BRIDGE OPERATION" MOTORSHIP, THE, REED BUSINESS INFORMATION LTD, SUTTON, GB, Bd. 78, Nr. 926, 1. September 1997 (1997-09-01), Seiten 41,43-44, XP000702552 ISSN: 0027-2001
- CHOU L-D ET AL: "DESIGN OF SHIPBOARD LAN AND INTERWORKING TO THE INTERNET" GLOBAL INFORMATION INFRASTRUCTURE (GII) EVOLUTION: INTERWORKING ISSUES. INTERWORKING '96. THIRD INTERNATIONAL SYMPOSIUM ON INTERWORKING. NARA (JAPAN), OCT. 1-3, 1996, AMSTERDAM, IOS, NL, 1. Oktober 1996 (1996-10-01), Seiten 392-401, XP000754586 ISBN: 90-5199-290-4

## Beschreibung

Die Erfindung bezieht sich auf ein Automation Trägersystem Schiff, das von einer Bedieninsel einer Multimedia-Informations- und Operations-Zentrale bedienbar ist und mit einer Anlage zur Überwachung und Befehligung des Schiffes, einer Anlage zur navigatorischen Führung des Schiffes, einer Anlage zur Koordinierung des Waffeneinsatzes, einer Anlage zur Abwicklung des externen und internen Funkverkehrs, einer Anlage zur Kontrolle und Abwicklung der Informationsverteilung, einer Anlage für Energieerzeugung und -verteilung (Power Management Überwachung) und einer Anlage zur Überwachung der Schiffsantriebstechnik in Form einer integrierten Anlage zur Überwachung und Kontrolle eines COPAW-Antrieb des Schiffes ausgerüstet ist.

Mit derartigen Automation Trägersystemen Schiff ausgerüstete Schiffe bzw. Marineschiffe sollen zukünftig mit einer geringeren Besatzungsstärke betreibbar sein. Der Erfindung liegt daher die Aufgabe zugrunde, das eingangs geschilderte gattungsgemäße Automation Trägersystem Schiff derart weiterzubilden, dass z.B. die Schiffssicherungs-Gruppenstände und der Maschinenkontrollraum entfallen können.

Diese Aufgabe wird erfindungsgemäß dadurch gelöst, dass das Automation Trägersystem Schiff eine Anlage zur automatischen Bekämpfung von Schiffsschäden und/oder ein ganzheitliches Bordinformations- und -datennetz aufweist, wobei diese Einrichtungen zur Überwachung und Erfassung des Aufenthaltsorts jedes Besatzungsmitglieds, wie drahtlose Funksensoren, vorzugsweise IR-Sensoren, intelligente Videokameraeinrichtungen und/oder kontaktlose Anwesenheits- bzw. Näherungsmelder besitzt.

Durch die erfindungsgemäß vorgesehene Ausgestaltung des Automation Trägersystems Schiff ist ein Betrieb des Schiffes bzw. Marineschiffes in allen denkbaren Zuständen mit einer weitaus geringeren Anzahl von Besatzungsmitgliedern möglich. Die Sensoren ersetzen sehr vorteilhaft Mannschaftsmitglieder, die in herkömmlicher Weise zur Schadensermittlung ausgesandt würden. Weiterhin wird der Bedrohung durch Terroristen Rechnung getragen!

Aus dem Aufsatz "The Command, Control, Communications and Information System", Standard Flex 300 , der als nächstliegender Stand der Technik angesehen wird, ist ein dem Oberbegriff des Hauptanspruchs entsprechendes Bus-System bekannt. Dieses ist jedoch in Bezug auf Gefechtsschäden "blind" und ermöglicht es insbesondere nicht, die Gefährdung und den Aufenthaltsort von Mannschaftsmitgliedern festzustellen. Auch seine Ausfallsicherheit ist nicht optimal.

Des Weiteren ist aus dem Aufsatz "One man bridge operation" eine "Einmannbrücke" bekannt, die die Grundausstattung einer Brücke angibt, die im Normalfall von einem Mann bedient wird. Für ein Gefecht, das zu Schäden am Schiff führt, ist diese Brücke jedoch nicht geeignet, da auf der Brücke die notwendigen Informationen fehlen.

Demgegenüber greift die Erfindung wesentlich weiter aus. Sämtliche Automationsfunktionen können von einer Bedieninsel in der Multimedia-Informations- und Operations-Zentrale vorgenommen werden; dies gilt auch im Bereich der Schadensbekämpfungseinsätze in Feuer- und Leckfällen, wobei sich im Einsatzfall keine Besatzungsmitglieder außerhalb der zentralen Gefechtsstationen befinden. Effektive Automatikfunktionen bezüglich der Brandbekämpfung und der Isolierung von Abteilungen des Schiffes sind in das vorstehend geschilderte Automation Trägersystem Schiff integriert.

Das ganzheitliche Bordinformations- und -datennetz wird zweckmäßigerweise aus miteinander vermaschten Teilnetzen ausgebildet.

Um die Belastungen des ganzheitlichen Bordinformations- und -datennetzes mit weiterzuleitenden Daten so gering wie möglich zu halten, ist es zweckmäßig, wenn zur Erfassung von Parametern Sensoren mit eingebauter Datenvorverarbeitung eingesetzt werden.

In beträchtlicher Weise lassen sich Kabelverbindungen und darauf zurückgehende bauliche Maßnahmen einsparen, wenn die Sensoren mit eingebauter Datenvorverarbeitung zumindest teilweise als Funksensoren ausgebildet sind. Zusätzliche Vorteile der gleichen Art ergeben sich, wenn die Aktoreinheiten des erfindungsgemäßen Automation Trägersystems Schiff ebenfalls zumindest teilweise als Funkaktoren ausgebildet sind.

Reparatur- und Instandhaltungsmaßnahmen lassen sich mit einem vergleichsweise geringen Aufwand durchführen, wenn die Sensoren mit eingebauter Datenvorverarbeitung als schnell austauschbare Sensoreinheiten ausgebildet sind.

Ein effektiverer Betrieb des ganzheitlichen Bordinformations-und -datennetzes wird darüber hinaus erzielt, wenn je Abteilung bzw. je Schiffssicherungsbereich eine Zentraleinheit zur Datensammlung vorgesehen ist, wobei in dieser Zentraleinheit die in der betreffenden Abteilung bzw. in dem betreffenden Schiffssicherungsbereich anfallenden Daten gesammelt werden.

Um zu verhindern, dass bei einer Feststellung des Aufenthaltsorts der Besatzungsmitglieder ein vergleichsweise großer Zeitraum verloren geht, wird entsprechend Anspruch 1 vorgeschlagen, dass das erfindungsgemäße. Automation Trägersystem Schiff eine Anlage zur Überwachung und Erfassung des Aufenthaltsorts jedes Besatzungsmitglieds aufweist, wobei diese Anlage u.a. vorzugsweise drahtlose Funksensoren, vorzugsweise IR-Sensoren, intelligente Videokameraeinrichtungen und/oder kontaktlose Anwesenheits- bzw. Näherungsmelder beinhalten kann.

Die einzelnen Bestandteile des erfindungsgemäßen Automation Trägersystems Schiff sollten vorzugsweise redundant ausgebildet sein, soweit dies möglich ist.

Die einzelnen, redundant ausgebildeten Bestandteile des erfindungsgemäßen Automation Trägersystems Schiff sind vorzugsweise so ausgebildet, dass mittels ihnen im Schadensfall automatisch Notschaltungen realisierbar sind.

Die Datenkommunikation im Bordinformations- und -datennetz ist durch Vermaschung des Netzwerks und eine hohe Bandbreite zur Übertragung von Messwert, Video-, Sprachdaten etc. mehrfach redundant ausgebildet.

Die in der Multimedia-Informations- und Operations-Zentrale des Schiffes vorgesehene Bedieninsel für das Automation Trägersystem Schiff hat zwei oder mehrere Bildschirme, die als 20"-Bildschirme ausgebildet sein können und deren Bedienung übergreifend über eine Tastatur und eine Trackballeinrichtung realisierbar ist, und Kopfhörer, mittels denen Alarmanmeldungen im Klartext übermittelbar sind.

Je Bildschirm können maximal vier der eingangs geschilderten Anlagen anzeigbar sein.

Die Bedieninsel des erfindungsgemäßen Automation Trägersystems Schiff kann mit Spracheingabeeinrichtungen, virtuellen Tastaturen und/oder Touchscreens ausgerüstet sein.

Zur Realisierung einer weitgehenden Redundanz ist es zweckmäßig, wenn das erfindungsgemäße Automation Trägersystem Schiff im Multiserverkonzept ausgelegt ist und mehrere Rechner, vorzugsweise drei Rechner, aufweist, von denen einer im Master-und die anderen im Standby-Betrieb betreibbar sind, wobei die im Standby-Betrieb betriebenen Rechner ständig aktualisiert werden.

Zur Bewältigung der anfallenden Datenflut ist es vorteilhaft, wenn die Leitungen des Bordinformations- und -datennetzes in LWL-Technik, ATM oder in doppelt redundanter Ringtechnik ausgebildet sind.

Zweckmäßigerweise sind im Bordinformations- und -datennetz Schnittstellen zum Energieerzeugungs- und -verteilungsnetz vorgesehen.

In das Automation Trägersystem Schiff sind vorteilhaft Entscheidungsalgorithmen implementiert, mittels denen die Entscheidungsfindung einer Bedienperson unterstützbar ist.

Darüber hinaus sollten in das Automation Trägersystem Schiff datenbank- und regelbasierende Expertensysteme integriert sein.

Vorteilhaft weist das Automation Trägersystem Schiff dann eine Zähleinheit auf, mittels der die Anzahl der von der Bedienungsperson übernommenen, durch das Automation Trägersystem Schiff erstellten Entscheidungsvorschläge erfassbar ist, wobei mittels des Prozentsatzes der von der Bedienungsperson übernommenen Entscheidungsvorschläge der Prozess der Entscheidungsfindung des Automation Trägersystems Schiff beeinflussbar ist.

Für den Einsatz des Schiffes kritische schiffstechnische Daten sind vorteilhaft in Verbindung mit einer Extraktbildung kontinuierlich und vereinfacht darstellbar.

Es sollte zumindest eine Schnittstelle zum Führungsmittel-und Waffeneinsatzsystem vorgesehen sein.

Um das Automation Trägersystem Schiff möglichst elastisch und störungsunanfällig auszugestalten, ist es vorteilhaft, wenn es in autarke Teilsysteme gegliedert ist, denen jeweils eine Rechnereinheit zugeordnet ist, die ohne übergeordnete Ebene betreibbar ist.

Zur Reduzierung des Aufwands sind die autarken Teilsysteme untereinander und an die übergeordnete Ebene des Automation Trägersystems Schiff mittels Standardschnittstellen verbunden.

Jedem autarken Teilsystem sollte vorzugsweise ein Vor-Ort-Bedienpanel zugeordnet sein.

Vorteilhaft ist das Bordinformations- und -datennetz nach Gefährdungsbereichen in Segmente aufgeteilt.

Hierbei sollte jedem Segment des Bordinformations- und -datennetzes eine dezentrale, galvanisch getrennte Stromversorgung zugeordnet sein.

Zur Reduzierung des Aufwands für den Betrieb des Automation Trägersystems Schiff ist es zweckmäßig, wenn es mit einer internen Fehlerdetektionseinrichtung versehen ist.

Um etwaig entstehende Schadensfälle, Unregelmäßigkeiten etc. frühzeitig zu erfassen, ist es vorteilhaft, wenn rotierenden Aggregaten Temperatur-, Druck-, Akustik- und Vibrationssensoren zugeordnet sind, deren erfasste Messwerte mathematisch verknüpfbar sind.

Auf der Grundlage erfasster Prozesswerte sollten erforderliche Wartungs- und/oder Reparaturmaßnahmen vorschlagbar sein.

Vorteilhaft ist in das erfindungsgemäße Automation Trägersystem Schiff ein zertifiziertes Betriebssystem implementiert.

Die für die Administration der autorisierten Benutzer notwendigen Daten sollten dezentral gespeichert und von jedem Rechner aus verfügbar sein.

Die Sicherungs- und/oder Speichermedien sind gemäß einer weiteren vorteilhaften Ausführungsform des erfindungsgemäßen Automation Trägersystems Schiff in den einzelnen Teilsystemen bzw. Segmenten redundant ausgebildet.

Schiffsspezifische Daten sollten mit einer gesonderten Sicherung versehen sein.

Um einen unautorisierten Betrieb des erfindungsgemäßen Automation Trägersystems Schiff durch Nichtberechtigte zu verhindern, sollten biometrische Zugangskontrollmittel vorgesehen sein.

Vorteilhaft sind seitens des Automation Trägersystems Schiff zu treffende Entscheidungen in schiffssicherheitsrelevante, nichtschiffssicherheitsrelevante und Menschen gefährdende Entscheidungen klassifizierbar, wobei durch das Automation Trägersystem Schiff bei Menschen gefährdenden Entscheidungen eine Entscheidung durch den Bediener obligatorisch abzufragen ist.

Für spezielle Katastrophen- und/oder Gefechtsfälle sollte zweckmäßigerweise ein Notbetriebszustand für das Automation Trägersystem Schiff vorgesehen sein, bei dem mittels des Automation Trägersystems Schiff Menschen gefährdende, schiffssicherheitsrelevante Entscheidungen autark gefällt werden können.

Der Videokameraeinrichtung des Automation Trägersystems Schiff kann eine Bildauswertung mit Rauchdetektion, Infrarotsignatur und Bewegungsmeldung zugeordnet sein.

Vorteilhaft ist des Weiteren ein berührungsloses Identifikationssystem zur Überwachung des Aufenthalts der Besatzungsmitglieder in das Automation Trägersystem Schiff integriert.

Das Automation Trägersystem Schiff ermöglicht in einer vorteilhaften Ausführungsform eine interaktive Ausbildung der betreffenden Bedienungspersonen an Bord.

Vorteilhaft sollte eine automatische Lagebilderstellung im Schadensfall durchführbar sein.

Um den Betriebsaufwand weiter zu reduzieren, ist es vorteilhaft, wenn das Automation Trägersystem Schiff mittels einer geeigneten Schnittstelle mit einem entsprechenden Automation Trägersystem Schiff eines anderen Schiffes und/oder einer Zentrale an Land verbindbar ist.

Diese geeignete Schnittstelle kann als Kabeldirektverbindung oder als kabellose Schnittstelle, z.B. als SMS-Schnittstelle, ausgebildet sein.

Zur Gewichtseinsparung ist es zweckmäßig, wenn die Schaltschränke, Pulte, Konsolen etc. des Automation Trägersystems Schiff aus innovativen, ein geringes Gewicht aufweisenden Werkstoffen ausgebildet sind.

Um das erfindungsgemäße Automation Trägersystem Schiff von möglichst vielen unterschiedlichen Stellen aus bedienbar zu gestalten, sollte es mittels entsprechender Schnittstellen an mobile Bedien- und Beobachtungsstationen anschließbar sein.

Die Regelalgorithmen zur Steuerung bzw. Regelung Geräusche verursachender Betriebseinheiten des Schiffes sollten unter Berücksichtigung niedriger Geräuschsignaturen ausgelegt sein.

Dokumentationselemente, wie Text-, Video- und Wartungsdaten etc. sind vorteilhaft zentral elektronisch pfleg- und mittels Datenbanksystemen verwaltbar.

Das Automation Trägersystem Schiff ist so gestaltet, dass mittels ihm eine vorbeugende Instandhaltung (predictive/ preventive maintenance) realisierbar ist. Dasselbe gilt hinsichtlich der Einsatzplanung von Wartungs- bzw. Instandhaltungspersonal und das Lebenszyklusmanagement für Anlagen- und Maschinenteile.

Des Weiteren ist es vorteilhaft, wenn auch eine Lagerverwaltung, ein Ersatzteilmanagement und Bestellvorgänge mittels des Automation Trägersystems Schiff realisiert werden können.

Das Automation Trägersystem Schiff sollte über Draht-und/oder Funkverbindungen mit einem übergeordneten Verwaltungssystem, z.B. einer Basis oder eines Stützpunkts, kommunikationsfähig sein.

Der Aufwand für den Betrieb des Automation Trägersystems Schiff wird weiter reduziert, wenn eine fremd unterstützte Ferninstandhaltung realisiert ist.

Um in Sondersituationen schnell und sicher reagieren zu können, ist es zweckmäßig, wenn bestimmte Alarmzustände mit dazugehörigen Dokumenten verlinkt sind, so dass eine Ereignis bezogene, kontext-sensitive Hilfestellung realisiert werden kann.

Das erfindungsgemäße Automation Trägersystem Schiff sollte vorteilhaft insoweit als Intranet an Bord ausgebildet sein, als durch Besatzungsmitglieder Informationen einspeis- und abrufbar sein sollen.

Das Intranet des Automation Trägersystems Schiff kann im Zusammenwirken mit seinen webfähigen Servern als Schnittstelle zum Internet fungieren.

Das Intranet ist vorteilhaft an das eines oder mehrerer anderer Schiffe anschließbar.

Des Weiteren kann das Intranet auch an ein landgestütztes Intranet anschließbar sein.

Im Folgenden wird die Erfindung anhand von Ausführungsformen unter Bezugnahme auf die Zeichnung näher erläutert.

Es zeigen:
- FIGUR 1: eine Darstellung einer Bedieninsel einer Multime- dia-Informations- und Operations-Zentrale (MIOZ);
- FIGUR 2a: eine prinzipielle Darstellung eines ganzheitlichen Bordinformations- und -datennetzes;
- FIGUR 2b: eine prinzipielle Darstellung eines alternativen ganzheitlichen Bordinformations- und -datennetzes;
- FIGUR 3: für die Bordlogistik vorgesehene Bestandteile des erfindungsgemäßen ganzheitlichen Bordinformations- und -datennetzes;
- FIGUR 4: eine Darstellung der Funktionen der für die Bord- logistik vorgesehenen Bestandteile des erfindungs- gemäßen ganzheitlichen Bordinformations- und - datennetzes;
- FIGUR 5: eine prinzipielle Darstellung der Kommunikations- möglichkeiten des erfindungsgemäßen ganzheitlichen Bordinformations- und -datennetzes;
- FIGUR 6: eine Darstellung der Sprach-, Video- und integ- rierten Datenübertragungen im erfindungsgemäßen ganzheitlichen Bordinformations- und -datennetz;
- FIGUR 7: eine Ausführungsform von wesentlichen Bestandtei- len eines für ein Überwasser-Marineschiff vorgese- henen erfindungsgemäßen Automation Trägersystems Schiff; und
- FIGUREN 8 bis 11: Ausführungsformen von bestimmten Abschnitten des in FIGUR 7 gezeigten erfindungsgemäßen Automation Trägersystems Schiff.

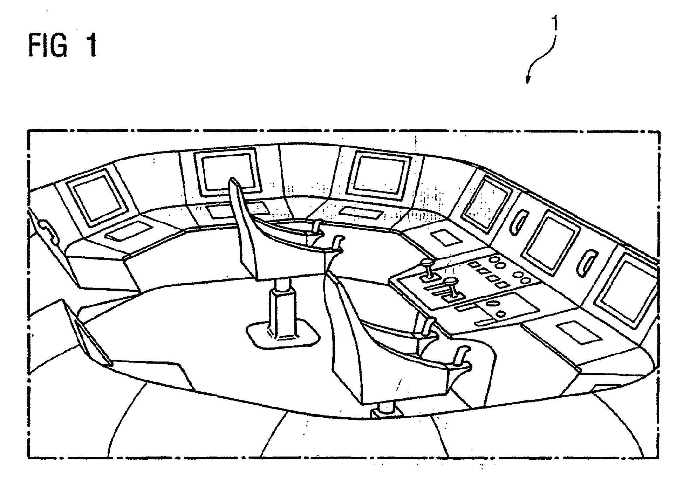

Ein im Folgenden anhand von Ausführungsformen und der FIGUREN 1 bis 11 näher beschriebenes, erfindungsgemäßes Automation Trägersystem Schiff ist von einer Bedieninsel 1 einer Multimedia-Informations- und Operations-Zentrale einer Plattform, beispielsweise eines Schiffes, aus bedienbar.

Zu dem erfindungsgemäßen Automation Trägersystems Schiff gehört eine Anlage zur navigatorischen Führung des Schiffes, eine Anlage zur Koordinierung des Waffeneinsatzes, eine Anlage zur Abwicklung des externen und internen Funkverkehrs, eine Anlage zur Kontrolle und Abwicklung der Informationsverteilung, eine Anlage zur automatischen Bekämpfung von Schiffsschäden, ein ganzheitliches Bordinformations- und - datennetz, eine integrierte Anlage zur Überwachung und Kontrolle eines COPAW-Antriebs des Schiffes, eine Anlage für Energieerzeugung und -verteilung (Power Management Überwachung) und eine Anlage zur Überwachung der Schiffsbetriebstechnik.

Mit dem erfindungsgemäßen Automation Trägersystem Schiff lässt sich ein Schiff der Fregattenklasse mit einer Besatzungsstärke von weniger als 100 Personen betreiben. Auf Schiffssicherungs-Gruppenstände sowie einen Maschinen-Kontrollraum kann verzichtet werden. Ein Notleitstand für das Automation Trägersystem Schiff ist vorgesehen, wobei dieser Notleitstand im Hinterschiff nahe der bzw. des PODs des COPAW-Antriebs angeordnet sein kann. Ein Not-Einsatzführungssystem (EFS) kann separat vom Notleitstand vorgesehen sein.

Die im Zusammenhang mit der Schiffssicherung, d.h. der Schadensbekämpfung im Fall von Feuer an Bord und Wassereinbrüchen, einhergehenden Prozesse und Vorgänge sind soweit wie möglich automatisiert, wobei sämtliche Automationsfunktionen von der Bedieninsel 1 des Automation Trägersystems Schiff aus vorgenommen werden. Die zur Schadensbekämpfung vorgesehenen Maßnahmen bei Feuer- und Leckereignissen werden somit von der Bedieninsel 1 aus geleitet.

Die Bedienung des Schiffes erfolgt zentral von der Multimedia-Informations- und Operations-Zentrale aus; im Einsatzfall befinden sich keine Besatzungsmitglieder außerhalb der zentralen Gefechtsstationen; daher können effektive Automatikfunktionen bezüglich der Brandbekämpfung und der Isolation von Schiffsabteilungen in Hauptbetriebsräumen integriert werden. Eine entsprechende Maßnahme betrifft lediglich die Anlagen und Systeme in dem jeweiligen Bereich.

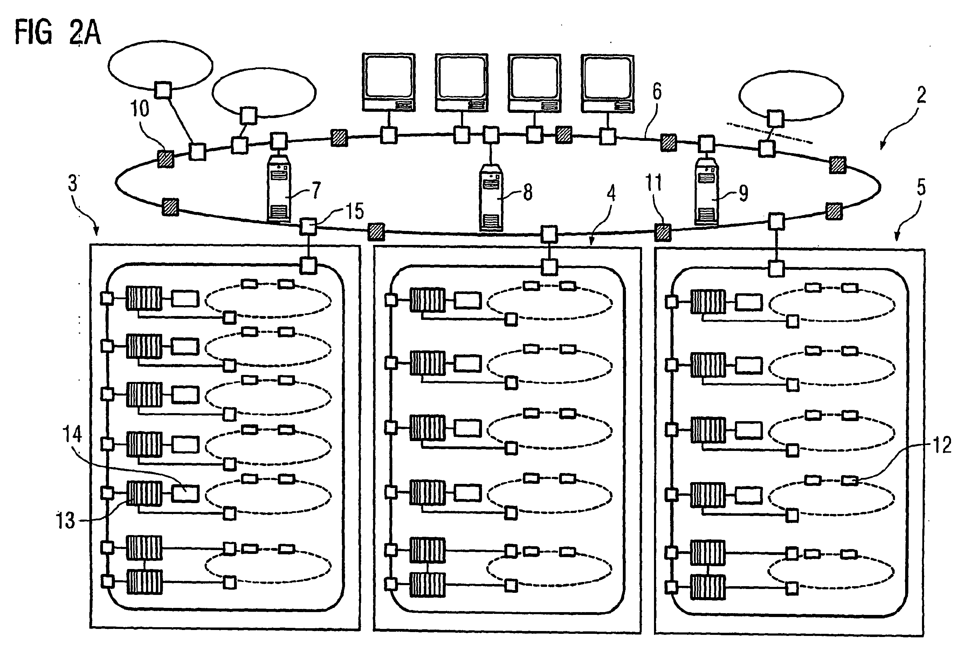

Die vorstehend beschriebene zentrale Bedienmöglichkeit von der Bedieninsel 1 in der Multimedia-Informations- und Operations-Zentrale aus erfordert eine umfangreiche Informations-und Messdatenerfassung. Das entsprechende ganzheitliche Bordinformations- und -datennetz 2, wie es in einer Ausführungsform z.B. in FIGUR 2a gezeigt ist, erfordert eine mehrfach redundante Auslegung. Entsprechend ist das ganzheitliche Bordinformations- und -datennetz 2 als vermaschtes Netzwerk ausgeführt, das neben einer hohen Verfügbarkeit auch eine hohe Bandbreite zur Übertragung von Daten aller Art, z.B. Messwerte, Videobilder und Sprache, bereitstellen kann.

Die Erfassung sämtlicher Daten soll rund um die Uhr automatisch über intelligente Peripheriegeräte und geeignete Sensoren zentral für jede Abteilung bzw. für jeden Schiffssicherungsbereich 3, 4, 5, wie in FIGUR 2a beispielhaft dargestellt, erfolgen.

Die hierzu erforderlichen Sensoren sind zumindest teilweise als Funksensoren ausgebildet, wobei in den Sensoren selbst eine intelligente Vorverarbeitung der durch die Sensoren erfassten Daten durchführbar ist. Diese Sensoren senden ihre Daten und Informationen an Zentraleinheiten, die mit dem vermaschten Bordinformations- und -datennetz 2 des Automation Trägersystems Schiff verbunden sind.

Der das Automation Trägersystem Schiff betreffende Arbeitsplatz in der Bedieninsel 1 kann beispielsweise mit zwei Bildschirmen ausgestattet werden, um verschiedene der eingangs erwähnten Anlagen und/oder Bordzustände gleichzeitig beobachten und kontrollieren zu können. Je Bildschirm können bis zu vier Anlagen-Systemfenster eingerichtet werden. Die beiden Bildschirme bzw. die jeweils vier Anlagen-Systemfenster können über Trackball übergreifend bedient werden.

Alternativ zu dieser Bedienungsart hat der Bediener die Möglichkeit, eine Bedienhandlung und/oder Steuerungen per Sprache- bzw. Direkteingabe durchzuführen. Wichtige Ereignisse, z.B. Alarmmeldungen, werden dem Bediener vom Automation Trägersystem Schiff über Kopfhörer im Klartext übermittelt. Sofern eine der eingangs erwähnten Anlagen die Möglichkeit bietet, aufgetretene Fehlfunktionen oder Funktionseinschränkungen durch Umschaltung auf redundante Anlagenteile zu beheben, so wird dies - soweit möglich - automatisch durchgeführt, ohne dass der Bediener in irgendeiner Form eingreifen bzw. tätig werden muss.

Die Bedieninsel 1 in der Multimedia-Informations- und Operations-Zentrale ist als Terminal ausgelegt, das über einen doppelt-redundanten, fiberoptischen Backbone-Ring-Bus 6 auf eine Server-Konstellation zugreift, die z.B. aus drei Rechnern 7, 8, 9 bestehen kann, wobei einer dieser Rechner als Master- und zwei dieser Rechner als Standby-Rechner fungieren. Im Normalbetrieb werden die gesamten Bedien- und Systemfunktionen sowie die Systemanforderungen von einem Rechner bzw. Server 7, 8, 9 bewältigt. Die Standby-Rechner bzw. - Server werden ständig aktualisiert und können verzugslos alle Aufgaben des Master-Rechners bzw. -Servers übernehmen.

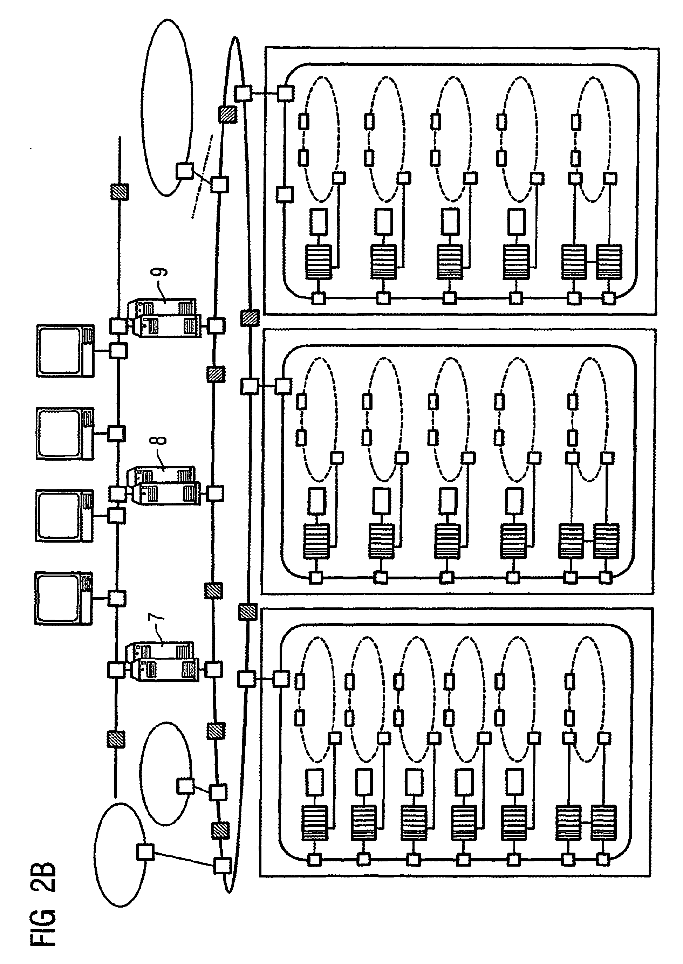

Wie aus der in FIGUR 2b dargestellten Ausführungsform des ganzheitlichen Bordinformations- und -datennetzes 2 hervorgeht, können die Rechner bzw. Server 7, 8, 9 ebenfalls redundant vorgesehen sein. Sie sind dann räumlich voneinander getrennt, d.h. möglichst weit vorn und achtern backbord und steuerbord oben und unten angeordnet.

Die beiden Bildschirme der Bedieninsel 1 sind beispielsweise als 20"-Flachbildschirme mit hoher Grafikauslösung ausgebildet, wobei auch eine Ausgestaltung z.B. als 28"-Flachbildschirme denkbar ist, und werden ebenso wie die Tastatur der Bedieninsel 1 und deren Trackball vom jeweiligen Master-Rechner bzw. -Server 7, 8, 9 gesteuert. Die Tastatur der Bedieninsel 1 besteht überwiegend aus speziellen Funktionstasten, deren Belegung auf die Bedienung des Automation Trägersystems Schiff zugeschnitten wird.

Die komplette Netzwerkarchitektur des Bordinformations- und -datennetzes 2 ist in Lichtwellenleitertechnik ausgeführt und somit unempfindlich gegenüber äußeren elektrischen und elektromagnetischen Einflüssen.

Die verwendeten Lichtwellenleiter ermöglichen eine hohe Übertragungsgeschwindigkeit und Bandbreite. Netzwerkknoten in dem aus doppelt-redundanten fiberoptischen Ring-Bus-Systemen mit hoher Bandbreite bestehenden Netzwerk unterstützen diese Eigenschaften und stellen gleichzeitig die Verfügbarkeit aller Informationen und Signale auf mehreren Datenstrecken sicher.

Im Backbone-Ring-Bus 6 des Bordinformations- und -datennetzes 2 sind Schnittstellen 10 vorgesehen, die im gesamten Schiff verteilt sind und zum Anschluss mobiler Bedienstationen vorgesehen sind. Mit Hilfe eines entsprechend ausgerüsteten Notebooks ist somit ein Bedienen und Beobachten des Automation Trägersystems Schiff auch in verschiedenen Abteilungen je nach Vorhandensein entsprechender Schnittstellen 10 gewährleistet.

Darüber hinaus sind Schnittstellen 11 vorgesehen, mittels denen eine Vielzahl im Hafen oder in See im Päckchen liegender Schiffe von einer Bedienstation an Land oder von der Multimedia-Informations- und Operations-Zentrale eines Schiffes aus überwacht werden kann. Derartige Schnittstellen 11 sind sowohl an der Backbord- als auch an der Steuerbordseite jedes mit dem Automation Trägersystem Schiff ausgerüsteten Schiffes vorgesehen.

Um eine leichte Austauschbarkeit von Peripherieeinheiten 12, z.B. Sensoren, und einem möglichst geringen Aufwand für die Verkabelung zu erreichen, sind die Peripherieeinheiten 12 bzw. Sensoren - zumindest teilweise - als Funkeinheiten bzw. Funksensoren ausgebildet; als solche sind sie mit einem vergleichsweise geringen Aufwand austauschbar, wobei darüber hinaus vermieden wird, dass im Falle eines beispielsweise auf Waffeneinwirkung zurückgehenden Fehlers oder Schadens umfangreiche Kabelreparaturen durchgeführt werden müssen.

Darüber hinaus sind die Peripherieeinheiten 12 mit einer eine Vorverarbeitung von Daten zulassenden Intelligenz ausgerüstet, so dass nachgeschaltete Rechnereinheiten entlastet werden können. Ein zur Druckerfassung vorgesehener Analogsensor überträgt beispielsweise kein vier bis zwanzig mA-Signal mehr, das in einer nachgeschalteten Recheneinheit oder in einer speicherprogrammierbaren Steuerung erst in einen Druckwert umgerechnet werden müsste, sondern er überträgt gleich die ihm als Analogsensor zugeordneten Daten, z.B. 0 bis 100 bar, Alarm bei 95 bar etc.

Auch die weiteren Bestandteile des Automation Trägersystems Schiff sind leicht auswechsel- und kurzfristig wieder in Betrieb nehmbar.

Das navigatorische Führen, das Inbetriebhalten und der Einsatz eines Marineschiffes mit minimaler Besatzung und somit zwangsläufig hohem Automatisierungsgrad ist ohne eine entsprechende systemgerechte Software nicht möglich. Genau wie beim automatischen Einsatz von Effektoren des Marineschiffes mittels automatisierter Entscheidungsalgorithmen ermöglicht auch im Bereich der Plattformtechnik erst die Software eine effektive Unterstützung der Besatzung sowie eine Optimierung der Einsatzfähigkeit unter Zugrundelegung des aktuellen Anlagenzustandes.

Das Automation Trägersystem Schiff ist daher mit einer zukunftsorientierten FüWES(Führungsmittel- und Waffeneinsatzsystem)-kompatiblen, variablen Systemsoftware mit Entscheidungsalgorithmen zur effektiven Unterstützung der Bediener sowie zur Optimierung der Automatisierungs- und ÜberwachungsFunktionen konzipiert.

Datenbank- und regelbasierende Expertensysteme realisieren Entscheidungsvorschläge und verhindern weitestgehend Fehlbedienungen. Sie werden online durch Eingabe von Erfahrungswerten des Bedieners optimiert und sind auf der Basis der Akzeptanzhäufigkeit der von ihnen gemachten Entscheidungsvorschläge durch den Bediener und der resultierenden Ergebnisse quasi selbst lernend ausgebildet.

Die Informationen und Ergebnisse der Zustandskontrolle und Beurteilung des Automation Trägersystems Schiff werden an die verschiedenen Bedienarbeitsplätze in den Bedieninseln FüWES und des Automation Trägersystems Schiff in der Multimedia-Informations- und Operations-Zentrale übertragen und bilden dort Einsatzkriterien für den Einsatz des Schiffes als Waffensystem. Derartige Einsatzkriterien können z.B. die verfügbare elektrische Leistung, die verfügbare Antriebsleistung, die verbleibende Einsatzreichweite bei einer bestimmten Geschwindigkeit, die Tankinhalte und Stabilitätsaussagen bei unterschiedlichen Verdrängungs-Zuständen und Seegang sein.

Das ganzheitliche Bordinformations- und Datennetz 2 des Automation Trägersystems Schiff ist als nach den Gefährdungs- bzw. Schiffssicherungsbereichen 3, 4, 5 segmentiertes Datennetzwerk ausgelegt, was zur Folge hat, dass Störungen eines Datennetzwerk-Segmentes keine Auswirkung auf andere Datennetzwerk-Segmente haben. Das Bordinformations- und - datennetzwerk ist, soweit angebracht, redundant aufgebaut. Durch den diversifizierten, vielfältig mit Reserven ausgestatteten Aufbau wird den für das Überleben, die Manövrierfähigkeit der Plattform bzw. des Schiffes sicherheitsrelevanten Steuerungen Rechnung getragen.

Als weiterer Beitrag zur Standfestigkeit des Automation Trägersystems Schiff ist eine dezentrale, den einzelnen Datennetzwerk-Segmenten zugeordnete Stromversorgung, die galvanisch von anderen Stromversorgungen getrennt ist, vorgesehen.

Die Hardware des Automation Trägersystems Schiff ist mit einer hohen Schock-, Rüttel- und EMV-Festigkeit sowie erprobten akustischen und magnetischen Eigenschaften mit hoher Fehlertoleranz, hoher Felderfahrung und kurzer MTTR (Meantime to Repair) versehen. Die verwendete Software ist durch entsprechende Standardisierung und entsprechende Verbreitung erprobt und qualifiziert.

Als Einzelteile sollten handelsübliche, d.h. nicht extra marineertüchtigte, COTS (Commercials Off The Shelf) verwendbar sein.

Zur Erhöhung der Standfestigkeit ist das Automation Trägersystem Schiff in ihrerseits automatisierte Untersysteme strukturiert. Für die Steuerung dieser Untersysteme ist jeweils ein Rechner bzw. Prozessor 13 vorgesehen, der eine autarke Intelligenz vor Ort zur Verfügung stellt und dezentralisiert aufgestellt ist. Dieser Rechner bzw. Prozessor 13 kann bei Auswahl der übergeordneten Ebene die Funktion seines Untersystems unabhängig von der übergeordneten Ebene aufrecht erhalten. Derartige, den jeweiligen Untersystemen zugeordnete Rechner bzw. Prozessor 13 sollten zweckmäßigerweise mittels Standardschnittstellen untereinander und an die übergeordnete Leitebene anschließbar sein.

Zur Realisierung zusätzlicher Redundanzvorteile sollten die Untersysteme darüber hinaus mit vor Ort angeordneten Bedienpanels 14 ausgerüstet sein, die bei Ausfall der übergeordneten Leitebene in letzter Konsequenz die Bedienung in direkter Nähe zur jeweiligen Anlage möglich machen, bevor auf der untersten Stufe der Bedienbarkeit die Handebene, wie im Marineschiffbau üblich, greift.

Das in FIGUR 2a gezeigten Ausführungsbeispiels des Bordinformations- und -datennetzes 2 ist darüber hinaus mit Netzwerkknoten 15 versehen, die der Vermaschung dienen und die Verfügbarkeit der Daten auf mehreren Datenstrecken sicherstellen.

Das Automation Trägersystem Schiff ist in der Lage, Eigenanalysen zu betreiben, d.h. Fehler zu detektieren, wozu sogenanntes BITE (Built In Test Equipment) dient.

Durch Überwachung einer Vielzahl von Betriebszuständen (Condition Monitoring) und durch Trendanalysen der vom Automation Trägersystem Schiff überwachten und gesteuerten Aggregate, bei denen es sich z.B. um rotierende Maschinen handeln kann, die aufgrund der Auswertung von Temperaturen, Drücken, Vibrationen, akustischen Verhalten der Anlagen und mathematischen Verknüpfungen mehrerer Prozessparameter erfolgen, sollen sich ankündigende Schäden rechtzeitig erkannt und Totalausfälle der jeweiligen Aggregate durch vorbeugende Instandhaltung (predictive maintenance) vermieden werden.

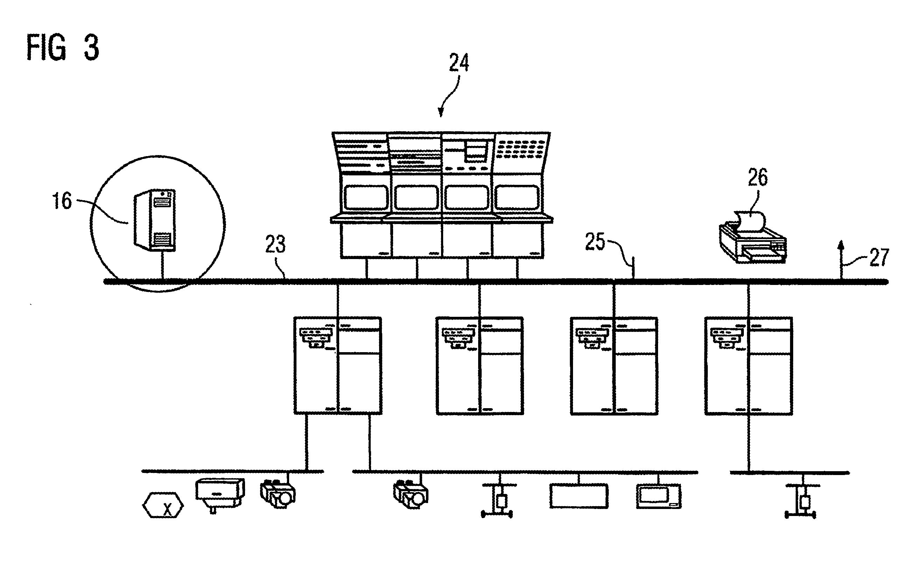

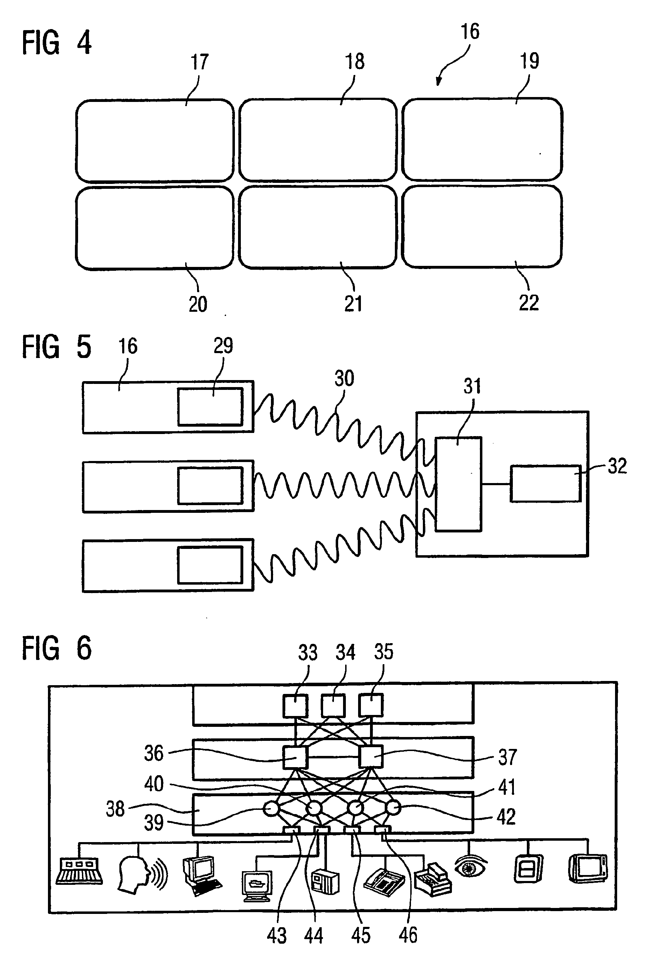

Hierzu ist in das Bordinformations- und -datennetz 2 ein Logistik-Server 16 integriert, der in FIGUR 3 dargestellt und dessen Funktionalitäten im Folgenden anhand von FIGUR 4 näher erläutert werden.

Der Logistik-Server 16 hat einen ersten Funktionsblock 17, der den Konfigurationsstatus betreffende Daten enthält. Ein zweiter Funktionsblock 18 enthält sich auf die Instandhaltung und die Reparatur beziehende Daten. Ein dritter Funktionsblock 19 enthält Daten, die sich auf durchgeführte Arbeiten, Reparaturarbeiten, verwendete Hilfsmittel, beteiligtes Personal, Zusatz- und Änderungsmaßnahmen beziehen. Ein vierter Funktionsblock 20 bezieht sich auf die Abteilungen und deren Zweige sowie auf entsprechend zugeordnete Personaldaten. Ein fünfter Funktionsblock 21 enthält Bauteil bezogene Daten. Ein sechster Funktionsblock 22 bezieht sich auf technische Dokumentationsdaten.

Der Logistik-Server 16 ist mittels einer einfachen oder einer redundanten Ethernetleitung 23 mit einer Zentrale 24 zur Verfahrenssteuerung sowie einem Anschluss 25 zur Fernkonfiguration und -instandhaltung, einem LAN-Drucker 26 sowie über einen Anschluss 27 mit den in Anlagen zur navigatorischen Führung des Schiffes und zur Koordinierung des Waffeneinsatzes etc. verbunden.

An die Ethernetleitung 23 sind eine Vielzahl LCU (Local Process Unit angeschlossen, die über Profi-Bus-Leitungen 28 an Peripherieeinheiten, z.B. Sensoren, Aktoren etc. angeschlossen sind.

Wie sich am besten aus FIGUR 5 ergibt, können die Logistik-Server 16 unterschiedlicher Schiffe über ein Modem 29 und eine Kommunikationsleitung 30 mit einem Modem 31 in Verbindung treten, das einem an Land angeordneten Server 32 zugeordnet ist.

Das Automation Trägersystem Schiff hat ein zertifiziertes Betriebssystem, um die Zugangssicherheit und die Datensicherheit zu gewährleisten. Die Nutzeradministration ist von jedem Rechner, d.h. von jeder Bedienstation aus, möglich. Die zur Administration notwendigen Daten sind daher auf jedem Rechner verfügbar, d.h. sie sind dezentral gelagert. In allen Segmenten des Bordinformations- und -datennetzes 2 sind die Sicherungs- und Speichermedien redundant und diversifiziert vorgesehen. Schiffsspezifische Daten sind gesondert gesichert.

Generell wird zur Sicherung gegen unbefugten Zugang zum Automatik Trägersystem Schiff eine biometrische Zugangskontrolle vorgesehen, bei der es sich beispielsweise um eine Bedienererkennung über Fingerprint oder Scannen der Iris handeln kann.

Mittels des Automation Trägersystems Schiff werden sowohl sicherheitsrelevante Prozesse als auch nicht sicherheitsrelevante Prozesse gesteuert. Sowohl bei sicherheitsrelevanten Prozessen als auch bei nicht sicherheitsrelevanten Prozessen können systemgesteuerte Entscheidungen und Maßnahmen oder eine Entscheidungsabforderung vom Bediener erfolgen.

Befindet sich das Schiff beispielsweise in einem Anlegemanöver und tritt beispielsweise ein Lagerschaden an einem Hauptantriebsaggregat auf, wäre ein automatisches Absetzen des Hauptantriebsaggregates auf dem Weg zur Pier nicht zwingend im Interesse des Bedieners; daher hätte der Bediener selbst zu entscheiden, ob das Hauptantriebsaggregat nicht besser bis zum Ende des Anlegemanövers betrieben wird.

Hierzu können beim Automation Trägersystem Schiff verschiedene Fahrmodi unterschieden werden, z.B. Anlegemanöver, Verlegefahrt, Gefechtsfahrt etc., wobei darüber hinaus das Einbinden von situationsabhängigen Vetomöglichkeiten des Bedieners vorgesehen ist.

Um die Abläufe und Auswirkungen automatisierter Prozesse, die erfassten Sensor- und Aktuatordaten zur Unterstützung des Bedieners bei Entscheidungsfindungen in einer handhabbaren Art und Weise darzustellen, wird neben der reinen Monitoring-Darstellung der Automation mit der Gesamtheit aller Daten und Schaltungskonstellationen als Interface zum Bediener das Plenum "Beratersystem" vorgeschlagen. Hierbei handelt es sich um einen bewerteten Extrakt aus dem Prozessabbild des Automation Trägersystems Schiff. Im Rahmen dieses Beratersystems sollen dem Bediener Vorschläge von Maßnahmen und Handlungsanweisungen nach intelligenter Vorverarbeitung von verschiedenen Prozessdaten, nach intelligenter Bildauswertung von Videosystemen, z.B. Rauchdetektion, Infrarotsignatur, Bewegungsmeldungen etc., an die Hand gegeben werden, die ihm die Abwicklung und Bearbeitung von Rollen erleichtern sollen.

Übernimmt das Beratersystem in der beschriebenen Weise eine Bewertung verfügbarer Daten, führt dies automatisch zu einer weniger personalintensiven Lagebilderstellung.

Zur Erleichterung der Erfassung des Aufenthalts der Besatzungsmitglieder werden berührungslose Identifikationssysteme vorgeschlagen. Die Besatzungsmitglieder tragen also beispielsweise Chipkarten bzw. elektronische Ausweise mit sich, mit denen sie bei Betreten eines Raumes automatisch durch Scannfunktionen als anwesend registriert werden.

Das Automation Trägersystem Schiff ist so gestaltet, dass seine Bedienung durch Bedienungspersonen mit Hilfe eines sog. OBTS (On Board Training System) erlernbar ist. Hierzu sind Lernprogramme vorgesehen, mittels denen der Bediener im Eigenstudium trainieren kann.

Das vorstehend geschilderte Automation Trägersystem Schiff kann zur Vereinfachung des Wachbetriebes im Hafen oder beim Liegen mehrerer Schiffe im Päckchen fernüberwacht und fernkontrolliert werden. Hierbei ist es über eine Kabeldirektverbindung oder über Intra-/Internet mit einer Bedienstation verbindbar, die an Bord eines anderen Schiffes bzw. an Land angeordnet ist.

Zur Reduzierung des Aufwands für die Verkabelung der Periepherieeinheiten 12 des Bordinformations- und -datennetzes 2 sind erstere, soweit möglich, so ausgestaltet, dass mittels ihnen Daten drahtlos übersandt bzw. empfangen werden können. Für die das Bordinformations- und -datennetz 2 ausbildenden Bus-Systeme kommen - soweit möglich - Lichtwellenleiter zum Einsatz. Schaltschränke, Pulte, Konsolen etc. sind - ebenfalls soweit möglich - aus innovativen, leichten Werkstoffen, z.B. aus Kohle- und Glasfaser, aus Leichtmetallen, ausgebildet.

An den u.a. dafür vorgesehenen Schnittstellen 10 können mobile Bedien- und Beobachtungsstationen an das Automation Trägersystem Schiff angeschlossen werden.

Darüber hinaus sind z.B. Spracheingabemöglichkeiten, virtuelle Tastaturen und Touchscreens im Bereich der Bedien- und Beobachtungsstationen vor Ort oder in der MIOZ vorgesehen.

Mittels des Bordinformations- und -datennetzes 2 sind Sprach-, Video- und integrierte Datenübertragungen auf einem Netzwerk möglich. Prinzipiell ist ein dazu geeignetes Netzwerk in FIGUR 6 gezeigt, wobei drei Server 33, 34, 35 über zentrale Netzknoten 36, 37, an die sie jeweils angeschlossen und die untereinander verbunden sind, mit einer Netzwerkverteilung 38 verbunden sind, deren Netzwerkknoten 39, 40, 41, 42 jeweils an beide zentralen Netzknoten 36, 37 angeschlossen sind, wobei diese Netzwerkknoten 39, 40, 41, 42 wiederum über Schalter 43, 44, 45, 46 und diesen zugeordnete Bus-Systeme mit Peripherieeinheiten verbunden sind. Jeder der Schalter 43, 44, 45, 46 ist mit zumindest zwei der Netzwerkknoten 39, 40, 41, 42 verbunden.

Eine derartige prinzipielle Ausgestaltung des Bordinformations- und -datennetzes 2 bietet die Möglichkeit, dass Besatzungsmitglieder von Marineschiffen bei langer Stehzeit in See unterschiedlichste Einrichtungen zur Unterhaltung und zur Weiterbildung nutzen können, z.B. das Internet, Bord-Video-Systeme etc.

Insbesondere aus FIGUR 2a geht hervor, dass über die Netzknoten 15 an beispielsweise den Backbone-Ring-Bus 6 des Bordinformations- und -datennetzes 2 ein Anschluss an ein Intranet 47 möglich ist, wobei zwischen den beiden den Anschluss realisierenden Netzknoten eine Firewall vorgesehen ist. Das Intranet 47 ersetzt den Gateway-Rechner zu anderen Systemen, wobei ein webfähiger Server vorausgesetzt ist. Das Intranet 47 kann quasi als Schnittstelle auch zum Internet fungieren.

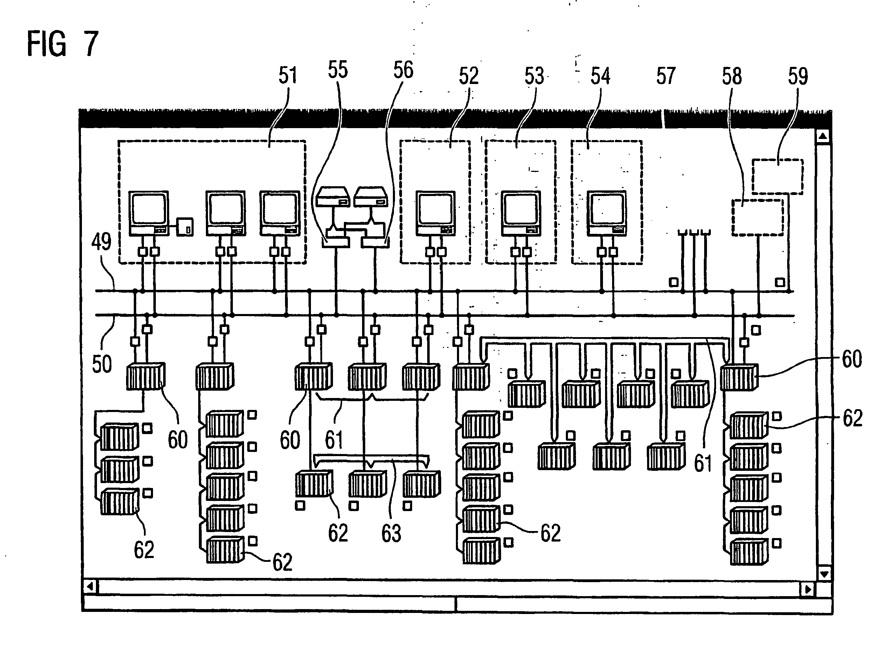

Anhand von FIGUR 7 ist des weiteren prinzipiell ein Teil des Bordinformations- und -datennetzes 2 des Automation Trägersystems Schiff dargestellt. Bei diesem in FIGUR 7 gezeigten Ausführungsbeispiel sind zwei separate Kupfer-Ethernet-Bus-Systeme 49, 50 vorgesehen. Über diese beiden Kupfer-Ethernet-Bus-Systeme 49, 50 sind eine Maschinenkontrollstation 51, eine hintere Schadenskontrollstation 52, eine vordere Schadenskontrollstation 53, eine Brückenstation 54, zwei Druckerserver 55, 56, ein Netzwerkanschluss 57 für in FIGUR 7 nicht dargestellte tragbare Bedienstationen sowie zwei Schnittstellen 58, 59, mittels denen die Kupfer-Ethernet-Bus-Systeme 49, 50 an benachbarte Schiffe bzw. an Hafenanlagen anschließbar sind, an eine Vielzahl lokaler Steuereinheiten 60 angeschlossen, von denen einige mittels eines Profi-Busses 61 miteinander in Verbindung stehen und einigen untergeordneten Substeuereinheiten 62 zugeordnet sind, die wiederum mittels Bus-Systemen miteinander in Verbindung stehen können.

Hierbei ist es auch möglich, dass unterschiedlichen Steuereinheiten 60 zugeordnete untergeordnete Steuereinheiten 62 durch ein Bus-System 63 miteinander verbunden sind.

Hinsichtlich der gewählten Bus-Topologie ist darauf hinzuweisen, dass auch ein doppelt-redundanter fiberoptischer Ethernet-Ringbus sowie ein Asynchrontransfermode (ATM)-Netzwerk zum Einsatz kommen kann.

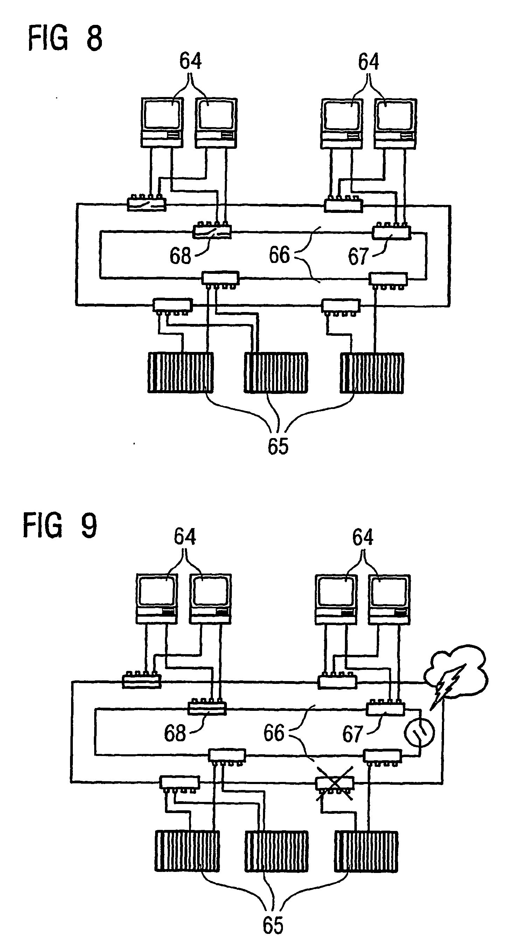

In einem derart ausgestalteten Bordinformations- und -datennetz 2, das teilweise in FIGUR 8 gezeigt ist, sind die Bedienstationen 64 und die Steuereinheiten 65 über sogenannte optische Schaltmodule (OSM)/Optical Switch Modules), die mit elektrischen und optischen Anschlüssen ausgestattet sind, mit dem Bus-System 66 verbunden.

Die auf Industrie-Ethernet basierende OSM-Technologie ermöglicht Automationsnetzwerke mit großen Entfernungen und einer großen Anzahl von Netzwerkknoten, wodurch die Konfiguration und das Design des Bordinformations- und Datennetzes 2 erheblich vereinfacht wird.

Die OSM 67 stellen eigene Kollisionsdomänen dar, die mit den jeweils anderen OSM 67 im Bordinformations- und -datennetz Punkt- zu -Punktverbindungen betreiben. Durch Filtern des Datenverkehrs bleibt lokaler Datenverkehr lokal; nur für andere Netzwerkknoten vorgesehen Daten werden zu anderen OSM 67 übertragen. Entsprechend entfällt der gemeinsame Zugriff aller im Bordinformations- und -datennetz 2 vorhandener OSM auf ein Übertragungsmedium und der damit verbundene Steuerungsaufwand.

Durch den Einsatz von Multimode-Gradet-Index-Fasern sind Netzwerkkonfigurationen im Bereich von Schiffsanwendungen hinsichtlich der Netzspannen nahezu grenzenlos möglich.

Wie aus FIGUR 8 und FIGUR 9 hervorgeht, können optische Schaltmodule 68 im fiberoptischen Industrie-Ethernet-Ring-Bus 66 als optische Redundanzeinheiten (ORM/Optical Redundanc Manager) betrieben werden. Die optische Redundanzeinheit bzw. der OSM 68 überwacht das Bus-System 66, schließt es beim Auftreten einer Unterbrechung kurz und stellt so im Falle von Schäden wieder eine funktionstüchtige Bus-Konfiguration her. Mit Hilfe dieser als optische Redundanzeinheiten ausgebildeten OSM 68 sind also Ringstrukturen mit einem zusätzlichen Maß an Medienredundanz realisierbar. Einzelne Fehler auf den jeweiligen Ring-Bus-Strukturen können ohne Datenverlust hingenommen werden, wie dies beispielsweise in FIGUR 9 dargestellt ist.

Diese Ausgestaltung des Bordinformations- und -datennetzes 2 bietet in Verbindung mit dem Multiserver-Konzept ein redundantes Daten-Bus-System, eine redundante Kommunikation und somit ein hohes Maß an Fehlertoleranz, Zuverlässigkeit und Überlebensfähigkeit. Aufgrund der Multiserver-Konzeption ist eine schnelle Kommunikation möglich; die Anzahl logischer Verknüpfungen ist gering, woraus eine geringere Kommunikationslast resultiert; jede Steuereinheit hat Verbindung zu einem Server, jedoch nicht zu allen Bedienstationen. Für alle Bedienstationen existiert ein Master-Prozessdatensatz.

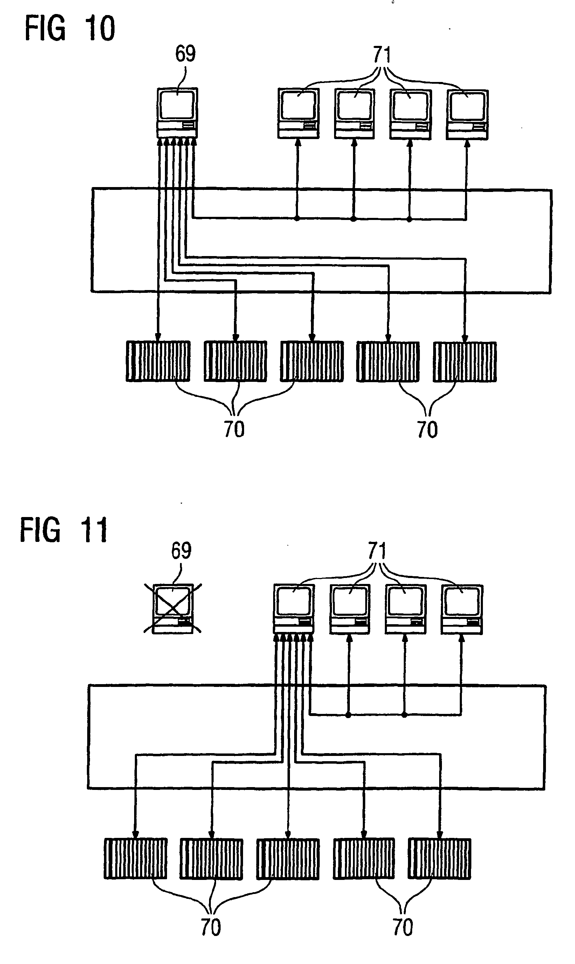

Bei der in FIGUR 10 prinzipiell gezeigten Ausführungsform liegt eine Kommunikationsstruktur vor, bei der die in der FIGUR linke Bedienstation 69 die Masterfunktion ausübt. An diese Bedienstation 69 sind die Steuereinheiten 70 sämtlich angeschlossen. Die die Masterfunktion ausübende Bedienstation 69 ist ihrerseits an weitere Bedienstationen 71 angeschlossen.

Bei Ausfall der in FIGUR 10 linken Bedienstation 69 werden die Steuereinheiten 70 ohne jedweden Zeitverlust an die in FIGUR 11 linke Bedienstation 71 angeschlossen, und zwar ohne jedweden Zeitverlust. Die in FIGUR 11 linke Bedienstation 71 übernimmt unmittelbar die Master- bzw. Serverfunktion.

Bei diesem anhand der FIGUREN 10 und 11 gezeigten Ausführungsbeispiel gilt als Basiskonzept, dass alle Bedienstationen 69, 71 identisch in ihrer Installation und Funktion sind. Jede einzelne Bedienstation 69, 71 kann, wenn notwendig, die Master- bzw. Serverfunktion zusätzlich zu ihren eigentlichen Bedienstationsaufgaben wahrnehmen. Nichtsdestotrotz übernimmt zeitgleich nur eine Bedienstation 69, 71 die Masterfunktion. Welche Bedienstation 69, 71 für die Übernahme der Masteraufgaben verantwortlich ist, wird über einen Algorithmus in der Multiserver-Funktion festgelegt. Alle anderen Bedienstationen 71 sind zu diesem Zeitpunkt Slaves.

Die die Masterfunktion ausübende Bedienstation 69, 71 verwaltet den Masterdatensatz der Prozessinformationen und sendet diesen automatisch an alle anderen angeschlossenen Bedienstationen 71, die als Slaves fungieren. Eine als Slave fungierende Bedienstation 71 kann, falls notwendig, ein Update für eine aktuelle Prozessinformation anfordern, z.B. beim Wiederhochlauf einer als Slave fungierenden Bedienstation 71 oder bei aufgrund von Schäden verlorenen Telegrammen von der als Master fungierenden Bedienstation 69, 71.

Sofern die als Master fungierende Bedienstation 69, 71 ausfällt, detektiert die Multiserver-Funktion diesen Ausfall und schaltet automatisch dem Algorithmus entsprechend die Masterfunktion auf die nächste Bedienstation 71. Das Umschalten von einer die Masterfunktion ausübenden Bedienstation 69, 71 auf die nächste Bedienstation 71, die die Masterfunktion übernehmen soll, bedeutet kommunikationstechnisch das Unterbrechen aller Verbindungen von allen Steuereinheiten 70 und als Slaves fungierenden Bedienstationen 71 zur als Master fungierenden Bedienstation 69, 71 und den Neuaufbau dieser Verbindungen zur nunmehr die Masterfunktion übernehmenden Bedienstation 71, wobei das Umschalten so schnell vonstatten geht, dass dieser Vorgang für den Bediener unbemerkt bleibt.

Die Multiserver-Funktion, die in einer höheren Kommunikationsebene implementiert ist, ist somit die Grundlage umfassender Redundanz. Mit n installierten Bedienstationen 69, 71 können somit, ohne Bedienstations- oder Serverfunktionalität zu verlieren, n-1 Bedienstationen 69, 71 ausfallen.

Als Peripherieeinheiten 12 können unterschiedliche intelligente Sensoren zum Einsatz kommen. Diese Sensoreinheiten verfügen über ein analoges Hardware-Design, eine Optik, integrierte ASICs (Application Specific Integrated Lirenits) und werden mittels integrierter Softwarealgorithmen betrieben.

In einer Ausführungsform verbinden derartige digitale Sensoren ein elektro-optisches Design mit Bildverarbeitungssoftware und einem komplexen mathematischen Algorithmus. Durch die Analyse von Multiparameter-Signatursignalen können sie beispielsweise zwischen einem Haustier und einem Kleinkind unterscheiden. Sie sind selbstverständlich drahtlos und verdrahtet verfügbar.

Das gilt auch für intelligente Sensoren mit Bewegungs-Vektoren-Analyse, die aufgrund der Analyse der Bewegungsrichtung wirksam zwischen erlaubten und nicht erlaubten Bewegungen unterscheiden können.

Digitale Dual-Technologie-Sensoren verbinden einen auf dem Dopplereffekt basierenden Mikrowellensendeempfänger mit einem passiven Infrarotsensor, der auf die Infrarotstrahlung reagiert, die vom menschlichen Körper ausgeht. Ein in diese Einheiten integrierter Softwarealgorithmus wandelt die menschliche Bewegung in Signale um. Die Signalanalyse wird gleichzeitig von beiden Technologien umgesetzt, so dass irgendwelche Alarmsignale nur erzeugt werden, wenn ein Sicherheitsfall von beiden Technologien entdeckt wird. Daher sind diese Dual-Technologie-Sensoren für Standorte geeignet, die Störungen durch Wind, Sonne oder andere extreme Elemente ausgesetzt sind.

Intelligente passive Infrarotsensoren als digitale und analoge Sensoren reagieren auf Temperaturveränderungen, die durch die Infrarotstrahlung ausgelöst werden, die vom menschlichen Körper ausgeht. Diese Strahlung wird von Pyro-Element-Sensoren aufgefangen und dann aus einem analogen in ein digitales Signal umgewandelt. Anschließend untersucht ein Mikroprozessor, ob es sich um ein Signal handelt, das von einer menschlichen Quelle ausgeht. Wie die weiteren vorstehend erläuterten Sensortypen, sind auch die letzteren als drahtlose und verdrahtete Versionen verfügbar.

Intelligente Glasbruchmelder identifizieren das Geräusch von brechendem Glas. Sie basieren auf einer dualen Technologie, die sowohl die Tiefenfrequenzen des Aufschlags als auch die hohen Frequenzen des zerspringenden Glases aufnimmt. Sie verfügen über eine Noise-Averaging-Technologie, die Hintergrundgeräusche filtert, damit Störsignale von anderen Geräuschquellen, z.B. von Klimaanlagen oder Glocken, unterdrückt werden. Auch hier sind drahtlose und verdrahtete Versionen verfügbar.

Derartige im Falle des Automation Trägersystems Schiff zum Einsatz kommende Aktoren und Sensoren können sich aus verfügbarer Umgebungsenergie selbst versorgen. Schaltelemente können sich z.B. aus der mechanischen Energie der Betätigung versorgen, Temperatursensoren aus dem Temperaturgefälle zur Umgebung, Vibrationssensoren aus der Energie der Vibration, Positionssensoren aus der Bewegung, Beleuchtungssensoren aus der Lichtenergie etc.

So kann beispielsweise ein Lichtschalter bei Betätigung ein Funksignal absenden, das eine eindeutige Nummer enthält. Es kann in bis zu 300 m Entfernung von einer Empfangseinheit registriert werden, die nun die zugeordnete Leuchte ein- oder ausschaltet. Derartige batterielose Funkschalter erlauben beispielsweise die Steuerung ganzer Installationsanlagen, ohne dass die Schalter verkabelt werden müssen.

Solche Funkschalter gewinnen ihre Energie beispielsweise aus der Betätigungskraft und sie können als einfach integrierbare Sendemodule ausgebildet sein. Alle üblichen Funktionen, wie Schalten, Dimmen und Steuern, sind realisierbar. Jeder Sender erhält bereits bei der Herstellung eine eindeutige 32-Bit-Adresse. Die Reichweite beträgt - wie oben bereits erwähnt - bis zu 300 m bei freier Ausbreitung.

Das Empfangsmodul ist kompakt und mit spezifischen Leistungsmodulen kombinierbar; entsprechend können vielfältige Applikationen realisiert werden, z.B. Licht- und Antriebssteuerungen. Eine offene Schnittstelle ermöglicht die Integration in beliebige Systeme. Jedes Empfangsmodul wird bei der Endinstallation so modifiziert, dass es nur auf Signale der ihm zugeordneten Sendemodule reagiert.

Als Peripherieeinheiten kommen des Weiteren Infrarot-Kamerasysteme in Betracht, die in Ausführungen verfügbar sind, die militärischen und z.B. auch raumfahrttechnischen Anforderungen genügen. Die thermische Kamera und die Linse sind in einem Gehäuse aufgenommen, das mit trockenem Stickstoff gefüllt ist und unter Überdruck steht. Sie arbeitet bei einer Spannung ab 12 VDC. Ein wasserdichtes Verbindungselement für PWRON/OFF, BLACK/HOT-WHITE/HOT, RS-170 VIDEO OUT, + 12 VDC, GND und eine UP/DOWN-Elektrofocussierung ist vorhanden. Eine Heizeinrichtung für die Ausgangsöffnung dient zu Sicherung des Betriebs bei ungünstigen klimatischen Verhältnissen. Darüber hinaus sind bestimmte Filter- bzw. Schutzschaltungen vorgesehen, um die Einheit gegen hochenergetische EMI zu schützen.

## Patentansprüche

1. Automation Trägersystem Schiff, das von einer Bedieninsel (1) einer Multemedia-Informations- und Operations-Zentrale bedienbar ist und mit einer Anlage zur Überwachung und Befehligung des Schiffes, einer Anlage zur navigatorischen Führung des Schiffes, einer Anlage zur Koordinierung des Waffeneinsatzes, einer Anlage zur Abwicklung des externen und internen Funkverkehrs, einer Anlage zur Kontrolle und Abwicklung der Informationsverteilung, einer Anlage für Energieerzeugung und -verteilung und einer Anlage zur Überwachung der Schiffsantriebstechnik in Form einer integrierten Anlage zur Überwachung und Kontrolle eines COPAW-Antriebs des Schiffes ausgerüstet ist, **dadurch gekennzeichnet, dass** das Automation Trägersystem Schiff eine Anlage zur automatischen Bekämpfung von Schiffsschäden und/oder ein ganzheitliches Bordinformations-und -datennetz (2) aufweist, wobei diese bzw. dieses Einrichtungen zur Überwachung und Erfassung des Aufenthaltsorts jedes Besatzungsmitglieds, wie drahtlose Funksensoren, vorzugsweise IR-Sensoren, intelligente Videokameraeinrichtungen und/oder kontaktlose Anwesenheits- bzw. Näherungsmelder besitzt.

2. Automation Trägersystem Schiff nach Anspruch 1, dessen ganzheitliches Bordinformations- und -datennetz (2) aus untereinander vermaschten Teilnetzen ausgebildet ist.

3. Automation Trägersystem Schiff nach einem der Ansprüche 1 oder 2, das zur Erfassung von Parametern Sensoren mit eingebauter Datenvorverarbeitung aufweist.

4. Automation Trägersystem Schiff nach Anspruch 3, dessen Sensoren mit eingebauter Datenvorverarbeitung zumindest teilweise als Funksensoren ausgebildet sind.

5. Automation Trägersystem Schiff nach einem der Ansprüche 3 oder 4, dessen Sensoren mit eingebauter Datenvorverarbeitung als schnell austauschbare Sensoreinheiten ausgebildet sind.

6. Automation Trägersystem Schiff nach einem der Ansprüche 1 bis 5, dessen einzelne Bestandteile redundant ausgebildet sind.

7. Automation Trägersystem Schiff nach Anspruch 6, dessen einzelne, redundant ausgebildete Bestandteile so ausgebildet sind, dass mittels ihnen im Schadensfall automatisch Notschaltungen realisierbar sind.

8. Automation Trägersystem Schiff nach einem der Ansprüche 1 bis 7, bei dem die Datenkommunikation im Bordinformations-und -datennetz (2) durch Vermaschung des Netzwerks und eine hohe Bandbreite zur Übertragung von Messwert-, Video-, Sprachdaten etc. mehrfach redundant ausgebildet ist.

9. Automation Trägersystem Schiff nach einem der Ansprüche 1 bis 8, das im Multiserverkonzept ausgelegt ist und mehrere, vorzugsweise redundant vorgesehene, Rechner, vorzugsweise drei Rechner (7, 8, 9), aufweist, von denen einer im Master-und die anderen im Standby-Betrieb betreibbar sind, wobei die im Standby-Betrieb betriebenen Rechner ständig aktualisiert werden.

10. Automation Trägersystem Schiff nach einem der Ansprüche 1 bis 9, bei dem Leitungen des Bordinformations- und -datennetzes (2) in LWL-Technik, ATM oder in doppelt redundanter Ringtechnik ausgebildet sind.

11. Automation Trägersystem Schiff nach einem der Ansprüche 1 bis 10, dessen Bordinformations- und -datennetz (2) Schnittstellen zum Energieerzeugungs- und -verteilungsnetz aufweist.

12. Automation Trägersystem Schiff nach einem der vorhergehenden Ansprüche, mittels dem für den Einsatz des Schiffes kritische schiffstechnische Daten auf der Brücke kontinuierlich und vereinfacht darstellbar sind.

13. Automation Trägersystem Schiff nach einem der vorhergehenden Ansprüche, das in autarke Teilsysteme gegliedert ist, denen jeweils eine Rechnereinheit zugeordnet ist, die ohne übergeordnete Ebene betreibbar ist.

14. Automation Trägersystem Schiff nach Anspruch 13, bei der die autarken Teilsysteme untereinander und an die übergeordnete Ebene des Automation Trägersystems Schiff über Standardschnittstellen verbunden sind.

15. Automation Trägersystem Schiff nach Anspruch 13 oder 14, bei dem autarken Teilsystemen ein Vor-Ort-Bedienpanel (14) zugeordnet ist.

16. Automation Trägersystem Schiff nach einem der vorhergehenden Ansprüche, dessen Bordinformations- und -datennetz (2) nach Gefährdungsbereichen in Segmente aufgeteilt ist.

17. Automation Trägersystem Schiff nach einem der vorhergehenden Ansprüche, das mit biometrischen Zugangskontrollmitteln für die Benutzer versehen ist.

18. Automation Trägersystem Schiff nach einem der vorhergehenden Ansprüche, bei dem seitens des Automation Trägersystems Schiff zu treffende Entscheidungen in schiffssicherheitsrelevante, nicht schiffssicherheitsrelevante und Menschen gefährdende Entscheidungen klassifizierbar sind, wobei durch das Automation Trägersystem Schiff bei Menschen gefährdenden Entscheidungen eine Entscheidung durch den Bediener obligatorisch abzufragen ist.

19. Automation Trägersystem Schiff nach Anspruch 18, mit einem Notbetriebszustand, bei dem mittels des Automation Trägersystems Schiff Menschen gefährdende, schiffssicherheitsrelevante Entscheidungen autark fällbar sind.

20. Automation Trägersystem Schiff nach Anspruch 1, dessen Videokameraeinrichtung eine Bildauswertung mit Rauchdetektion, Infrarotsignatur und Bewegungsmeldung zugeordnet ist.

21. Automation Trägersystem Schiff nach einem der vorhergehenden Ansprüche, das ein berührungsloses Identifikationssystem zur Überwachung des Aufenthalts der Besatzungsmitglieder aufweist.

22. Automation Trägersystem Schiff nach einem der vorhergehenden Ansprüche, mittels dem eine automatische Lagebilderstellung im Schadensfall durchführbar ist.

23. Automation Trägersystem Schiff nach einem der vorhergehenden Ansprüche, in dem bestimmte Alarmzustände mit dazugehörigen Dokumenten verlinkt sind, um eine Ereignis bezogene kontext-sensitive Hilfestellung zu realisieren.

24. Automation Trägersystem Schiff nach einem der vorhergehenden Ansprüche, welches als Intranet an Bord ausgebildet ist, aus dem durch Besatzungsmitglieder Informationen einspeis- und abrufbar sind.

25. Automation Trägersystem Schiff nach Anspruch 24, dessen Intranet im Zusammenwirken mit webfähigen Servern als Schnittstelle zum Internet fungieren kann.

26. Automation Trägersystem Schiff nach einem der Ansprüche 24 oder 25, dessen Intranet an ein landgestütztes Intranet anschließbar ist.

## Claims

1. Automation carrier system of a ship, which can be operated from a control station (1) of a multimedia information and operation control centre, and is equipped with an installation for monitoring and communicating commands in the ship, an installation for navigation guidance of the ship, an installation for coordination of weapon use, an installation for handling the external and internal radio traffic, an installation for checking and handling the information distribution, an installation for power generation and distribution, and an installation for monitoring the ship propulsion in the form of an integrated installation for monitoring and checking a COPAW propulsion system for the ship, **characterized in that** the automation carrier system of the ship has an installation for automatically combating ship damage and/or a comprehensive on-board information data network (2) and wherein said installation or said on-board information data network has devices, such as wire-free radio sensors, preferably IR sensors, intelligent video camera devices and/or contactless presence and/or proximity sensors, for monitoring and detecting the location of every crew member.

2. Automation carrier system of a ship according to Claim 1, whose comprehensive on-board information and data network (2) is formed by differently networked subnetworks.

3. Automation carrier system of a ship according to one of Claims 1 or 2, which has sensors with built-in data preprocessing for detection of parameters.

4. Automation carrier system of a ship according to Claim 3, at least some of whose sensors with built-in data preprocessing are in the form of radio sensors.

5. Automation carrier system of a ship according to one Claims 3 or 4, whose sensors with built-in data preprocessing are in the form of quickly replaceable sensor units.

6. Automation carrier system of a ship according to one of Claims 1 to 5, whose individual components are of redundant design.

7. Automation carrier system of a ship according to Claim 6, whose individual, redundant components are designed such that they can be used to produce emergency circuits automatically in the event of damage.

8. Automation carrier system of a ship according to one of Claims 1 to 7, in which the data communication in the on-board information and data network (2) has multiple redundancy, as a result of the networking of the network and a wide bandwidth for transmission of measured-value, video, speech data etc.

9. Automation carrier system of a ship according to one of Claims 1 to 8, which is designed using the multi-server concept and has a plurality of preferably redundant computers, preferably three computers (7, 8, 9), one of which can be operated in the master mode and the others in the standby mode, with the computers which are operated in the standby mode being continually updated.

10. Automation carrier system of a ship according to one of Claims 1 to 9, in which lines for the on-board information and data network (2) use optical waveguide technology, ATM or double-redundant ring technology.

11. Automation carrier system of a ship according to one of Claims 1 to 10, whose on-board information and data network (2) has interfaces to the power generation and distribution network.

12. Automation carrier system of a ship according to one of the preceding claims, by means of which ship-technical data, which is critical for operation of the ship, can be displayed continuously and in a simplified form on the bridge.

13. Automation carrier system of a ship according to one of the preceding claims, which is subdivided into autonomous subsystems, each of which has an associated computer unit which can be operated without a superordinate level.

14. Automation carrier system of a ship according to Claim 13, in which the autonomous subsystems are connected to one another and to the superordinate level of the automation carrier system of the ship via standard interfaces.

15. Automation carrier system of a ship according to Claim 13 or 14, in which autonomous subsystems have an associated local control panel (14).

16. Automation carrier system of a ship according to one of the preceding claims, whose on-board information and data network (2) is subdivided into segments on the basis of danger areas.

17. Automation carrier system of a ship according to one of the preceding claims, which is provided with biometric access control means for the users.

18. Automation carrier system of a ship according to one of the preceding claims, in which decisions to be made by the automation carrier system of the ship can be classified as decisions which are relevant to ship safety, are not relevant to ship safety and decisions which endanger personnel, wherein in the case of decisions which endanger personnel, it is obligatory for the operator to question a decision by the automation carrier system of the ship.

19. Automation carrier system of a ship according to Claim 18, having an emergency operating mode in which decisions which endanger personnel and are relevant to ship safety can be made autonomously by means of the automation carrier system of the ship.

20. Automation carrier system of a ship according to Claim 1, whose video camera device has associated image evaluation with smoke detection, infra red signature and movement signalling.

21. Automation carrier system of a ship according to one of the preceding claims, which has a contactless identification system for monitoring the location of the crew members.

22. Automation carrier system of a ship according to one of the preceding claims, by means of which an automatic situation display can be produced in the event of damage.

23. Automation carrier system of a ship according to one of the preceding claims, in which certain alarm states are linked to associated documents in order to provide context-sensitive assistance related to an event.

24. Automation carrier system of a ship according to one of the preceding claims, which is in the form of an on-board Intranet, from which information can be fed in and called back by crew members.

25. Automation carrier system of a ship according to Claim 24, whose Intranet can function, in interaction with web-compatible servers, as an interface to the Internet.

26. Automation carrier system of a ship according to one of Claims 24 or 25, whose Intranet can be connected to a land-based Intranet.

## Revendications

1. Navire à système de base automatique, qui peut être desservi par un îlot de service d'une centrale multimédia d'information et d'opération et qui est équipé d'un système de contrôle et de commandement du navire, d'un système de conduite de navigation du navire, d'un système de coordination de l'utilisation d'armes, d'un système de déroulement du trafic radio intérieur et extérieur, d'un système de contrôle et de déroulement de la distribution d'information, d'un système de production et de distribution d'énergie et un système de contrôle de la technique de propulsion du navire sous la forme d'un système intégré de surveillance et de contrôle d'une propulsion COPAW du navire, **caractérisé en ce que** le navire à système de base automatique comporte un système pour lutter automatiquement contre des avaries du navire et/ou un réseau ( 2 ) intégré d'informations et de données de bord, ceux-ci ou celui-ci ayant des dispositifs de contrôle et de détection du lieu où se trouve chaque membre d'équipage, comme des capteurs radio sans fil, de préférence des capteurs IR, des dispositifs intelligents à caméra vidéo et/ou des indicateurs de présence ou de proximité sans contact.

2. Navire à système de base automatique suivant la revendication 1, dont le réseau ( 2 ) d'informations et de données de bord intégré est formé de sous-réseaux maillés entre eux.

3. Navire à système de base automatique suivant l'une des revendications 1 ou 2, qui a, pour la détection de paramètres, des capteurs ayant un traitement de données incorporé.

4. Navire à système de base automatique suivant la revendication 3, dont les capteurs à traitement de données incorporé sont constitués au moins en partie sous la forme de capteurs radio.

5. Navire à système de base automatique suivant l'une des revendications 3 ou 4, dont les capteurs à traitement de données incorporé sont constitués sous la forme d'unités de capteur pouvant être remplacées rapidement.

6. Navire à système de base automatique suivant l'une des revendications 1 à 5, dont les divers constituants sont constitués de manière redondante.

7. Navire à système de base automatique suivant la revendication 6, dont les constituants individuels formés de manière redondante sont constitués de manière à pouvoir réaliser, au moyen d'eux, des circuits de secours automatiquement en cas d'avarie.

8. Navire à système de base automatique suivant l'une des revendications 1 à 7, dans lequel la communication de données dans le réseau ( 2 ) d'informations et de données de bord est constituée d'une manière redondante plusieurs fois par maillage du réseau et par une grande largeur de bande pour la transmission de données de valeur de mesure, de données vidéo, de données vocale, etc.

9. Navire à système de base automatique suivant l'une des revendications 1 à 8, qui est conçu en concept multiserveur et qui a plusieurs ordinateurs, de préférence, trois ordinateurs ( 7, 8, 9 ) prévus de préférence de manière redondante, dont l'un peut fonctionner en fonctionnement maître et les autres en fonctionnement de secours, les ordinateurs qui fonctionnent en fonctionnement de secours étant mis à jour constamment.

10. Navire à système de base automatique suivant l'une des revendications 1 à 9, dans lequel des lignes du réseau ( 2 ) d'informations et de données de bord sont constituées en technique LWL, en technique ATM ou en technique annulaire redondante doublée.

11. Navire à système de base automatique suivant l'une des revendications 1 à 10, dans le réseau ( 2 ) d'informations et de données de bord a des interfaces pour le réseau de production et de distribution d'énergie.

12. Navire à système de base automatique suivant l'une des revendications précédentes, au moyen duquel des données de technique navale critiques pour l'utilisation du navire peuvent être représentées d'une manière continue et simplifiée sur le pont.

13. Navire à système de base automatique suivant l'une des revendications précédentes, qui est articulé en des sous-système autonomes, auxquels est affecté respectivement une unité informatique qui peut fonctionner sans plan supérieur hiérarchiquement.

14. Navire à système de base automatique suivant la revendication 13, dans lequel les sous-systèmes autonomes sont reliés entre eux et au plan supérieur hiérarchiquement du navire à système de base automatique par des interfaces standards.

15. Navire à système de base automatique suivant la revendication 13 ou 14, dans lequel un panneau ( 14 ) de service sur site est associé aux sous-systèmes autonomes.

16. Navire à système de base automatique suivant l'une des revendications précédentes, dont le réseau ( 2 ) d'informations et de données de bord est réparti en segments suivant les zones de danger.

17. Navire à système de base automatique suivant l'une des revendications précédentes, qui est pourvu de moyens biométrique de contrôle d'accès des utilisateurs.

18. Navire à système de base automatique suivant l'une des revendications précédentes, dans lequel des décisions à prendre par le navire à système de base automatique peuvent être classées en des décisions relevant de la sécurité du navire, en des décisions ne relevant pas de la sécurité du navire et en des décisions dangereuses pour les hommes, une décision étant demandée obligatoirement dans l'opérateur par le navire à système de base automatique pour des décisions dangereuses pour les hommes.

19. Navire à système de base automatique suivant la revendication 18, comprenant un état de fonctionnement d'urgence, dans lequel, au moyen du système de base automatique, des décisions relevant de la sécurité du navire et dangereuses pour les hommes peuvent être prises de manière indépendante.

20. Navire à système de base automatique suivant la revendication 1, dans lequel une exploitation d'images avec détection de fumée, signature infrarouge et indication de mouvement est associée au dispositif de caméra vidéo.

21. Navire à système de base automatique suivant l'une des revendications précédentes, qui comporte un système d'identification sans contact pour le contrôle du séjour des membres de l'équipage.

22. Navire à système de base automatique suivant l'une des revendications précédentes, au moyen duquel un établissement automatique d'une image de position peut être effectué en cas d'avarie.

23. Navire à système de base automatique suivant l'une des revendications précédentes, dans lequel des états d'alerte déterminés sont reliés à des documents associés pour réaliser une position auxiliaire sensible au contexte rapporté à un évènement.

24. Navire à système de base automatique suivant l'une des revendications précédentes, qui est constitué en intranet de bord, à partir duquel des informations peuvent être injectées et appelées par des membres de l'équipage.

25. Navire à système de base automatique suivant la revendication 24, dont l'intranet peut fonctionner en coopération avec des serveurs pouvant être mis sur la toile en tant qu'interface avec l'internet.

26. Navire à système de base automatique suivant l'une des revendications 24 ou 25, dont l'intranet peut être raccordé à un intranet à terre.
